# EUROPEAN PATENT APPLICATION

(11) **EP 4 845 089 A1**
(43) Date of publication of application: **25.11.2026**
(21) Application number: 26161095.0
(22) Date of filing: 26.02.2026
(51) Int. Cl.: H04L 9/08, H04B 10/70, H04L 9/12

(54) **PROCESSING DEVICE, QKD DEVICE, QKD SYSTEM, PROCESSING METHOD, AND COMPUTER PROGRAM**

(30) Priority: 23.05.2025 JP 2025086410
(71) Applicant: KABUSHIKI KAISHA TOSHIBA, Kawasaki-shi, Kanagawa 212-0013 (JP)
(72) Inventor: Murakami, Akira, Kawasaki-shi (JP); TANIZAWA, Yoshimichi, Kawasaki-shi (JP)
(74) Representative: Marks & Clerk LLP

(57) **Abstract**

A processing device (3a) according to an embodiment includes a processing unit (15a). The processing unit (15a) receives a reception status of a quantum signal of quantum key distribution (QKD) from a reception device (2a). The processing unit (15a) determines a timing at which a synchronization signal to be subjected to optical wavelength-division multiplexing with the quantum signal is transmitted to the reception device (2a). The timing is determined based on the reception status of the quantum signal.

## Description

### FIELD

Embodiments of the present disclosure relate generally to a processing device, a QKD device, a QKD system, a processing method, and a computer program.

### BACKGROUND

Quantum key distribution (hereinafter, QKD) is a technology for securely sharing an encryption key between a transmission device and a reception device, which are connected by an optical fiber. The transmission device serves to continuously transmit a single photon. The reception device serves to receive the single photon from the transmission device. An encryption key shared by the QKD is guaranteed not to be eavesdropped on based on the principle of quantum mechanics.

It is guaranteed by information theory that data subjected to encrypted data communication using a shared encryption key by a cryptographic communication method called a one-time pad cannot be decrypted by an eavesdropper having any knowledge.

However, in the related art technique, it is difficult to reduce the number of optical fibers without impairing the generation speed of the encryption key using the QKD.

### BRIEF DESCRIPTION OF THE DRAWINGS

FIG. 1 is a diagram illustrating an example of a device configuration of a general QKD system;
FIG. 2 is a diagram illustrating an example of a device configuration of a QKD system according to the first embodiment;
FIG. 3 is a diagram illustrating a processing example of optical wavelength-division multiplexing of the transmission device according to the first embodiment;
FIG. 4 is a flowchart illustrating an example of a timing adjustment method of the transmission device according to the first embodiment;
FIG. 5 is a flowchart illustrating an example of a timing adjustment method of the QKD system according to the first embodiment;
FIG. 6 is a flowchart illustrating an example of a timing adjustment method of a QKD system according to the first modification of the first embodiment;
FIG. 7 is a flowchart illustrating an example of a timing adjustment method of a QKD system according to the second modification of the first embodiment;
FIG. 8 is a diagram illustrating an example of a device configuration of a QKD system according to the second embodiment;
FIG. 9 is a diagram illustrating an example of a device configuration of a QKD system according to the third embodiment; and
FIG. 10 is a diagram illustrating an example of a hardware configuration of a transmission device and a reception device according to the first to third embodiments and a processing device according to the third embodiment.

### DETAILED DESCRIPTION

A processing device according to one embodiment includes a processing unit. The processing unit is configured to receive a reception status of a quantum signal of quantum key distribution (QKD) from a reception device. The processing unit is configured to determine a timing at which a synchronization signal to be subjected to optical wavelength-division multiplexing with the quantum signal is transmitted to the reception device. The timing is determined based on the reception status of the quantum signal.

Hereinafter, embodiments of a processing device, a QKD device, a QKD system, a processing method, and a computer program will be described in detail with reference to the accompanying drawings.

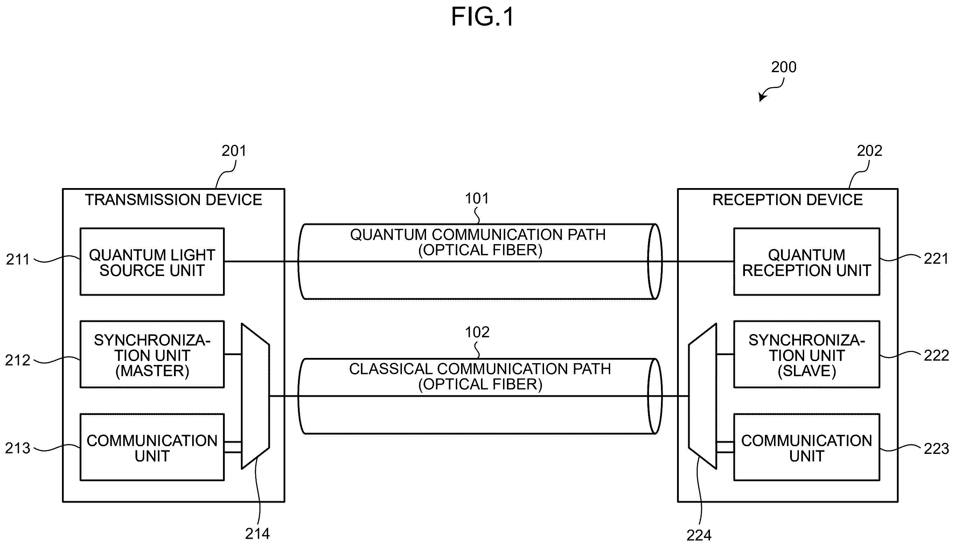

Hereinafter, an encryption key exchange device using quantum key distribution (QKD) technology is referred to as a QKD device. An encryption key exchange system including a plurality of QKD devices is referred to as a QKD system. Before describing the QKD system of the first embodiment, first, an example of a general QKD system will be described with reference to FIG. 1.

FIG. 1 is a diagram illustrating an example of a device configuration of a general QKD system 200. A general QKD system 200 includes a transmission device 201, a reception device 202, and two optical fibers (a quantum communication path 101 and a classical communication path 102).

The transmission device 201 is a transmission side QKD device. The transmission device 201 includes a quantum light source unit 211, a synchronization unit (master) 212, a communication unit 213, and a multiplexing unit 214.

The quantum light source unit 211 generates photons, encodes encryption key information into the photons, and transmits the photons into which the encryption key information is encoded to the reception device 202. The synchronization unit (master) 212 generates an optical pulse of a synchronization signal between the transmission device 201 and the reception device 202 and transmits the synchronization signal to the reception device 202. The communication unit 213 transmits a data signal received by a communication unit 223 of the reception device 202. The multiplexing unit 214 performs optical wavelength-division multiplexing on the synchronization signal of a synchronization unit (master) 12a and the data signal of the communication unit 213, and outputs one optical wavelength-division multiplexed signal.

The reception device 202 is a reception side QKD device. The reception device 202 includes a quantum reception unit 221, a synchronization unit (slave) 222, the communication unit 223, and a multiplexing unit 224.

The quantum reception unit 221 receives the photons transmitted from the transmission device 201 and decodes the encryption key information from the photons. The synchronization unit (slave) 222 receives a synchronization signal from the transmission device 201 and synchronizes the timing of reception process of the quantum signal transmitted from the transmission device 201 based on the synchronization signal. The communication unit 223 receives a data signal transmitted from the communication unit 213 of the transmission device 201. The multiplexing unit 224 demultiplexes the optical wavelength-division multiplexed signal by the multiplexing unit 214 into a synchronization signal and a data signal, inputs the synchronization signal to the synchronization unit (slave) 222, and inputs the data signal to the communication unit 223.

The quantum communication path 101 is used for transmission of a quantum signal into which encryption key information is encoded. The classical communication path 102 is used for transmission of a synchronization signal between the transmission device 201 and the reception device 202 and an optical signal such as data communication.

The quantum signal in the quantum communication path 101 is very weak (one photon level per pulse), as compared with the optical signal in the classical communication path 102. Therefore, physically separate optical fibers are usually used for the quantum communication path and the classical communication path. In addition, in order to transmit a signal dedicated to the QKD device, the optical fiber of the quantum communication path 101 and the optical fiber of the classical communication path 102 need to be separate dark fibers. In order to save the number of dark fibers, the synchronization signal and the data signal are subjected to optical wavelength-division multiplexing by the transmission device 201, and are transmitted by one dark fiber in many cases.

In a general QKD device, two dark fibers are required in total; one for a quantum signal and one for a classical signal (data and clock). As one of methods for improving the key generation speed of QKD, a method of performing optical wavelength-division multiplexing on a QKD device has been known. However, in a case of the QKD devices with a redundant configuration, the number of necessary dark fibers increases, and the introduction cost increases. In addition, it may be difficult to introduce necessary dark fibers.

As a method of saving the number of fibers, there is a technique of multiplexing a quantum signal and a classical signal (clock, data) into one dark fiber, and when this technique is used, the number of necessary dark fibers can be saved to one per QKD device. However, in this multiplexing technique, noise to the quantum signal is strong only by the wavelength filter, and it is necessary to change the intensity of the classical signal to be lowered.

In addition, when the wavelength of the quantum signal is close to the wavelength of the classical signal, noise to the quantum signal cannot be removed, and the key generation speed decreases. Although the wavelength of the quantum signal of the QKD device may be changed to around 1310 nm for wavelength separation, the loss of the optical fiber increases and the key generation speed decreases.

In the following embodiment, an embodiment of a QKD system in which a quantum signal and a classical signal are multiplexed while using a C-band (1530 nm to 1565 nm) quantum signal with the smallest fiber loss, and the number of used fibers can be reduced while maintaining a key generation speed will be described.

### First embodiment

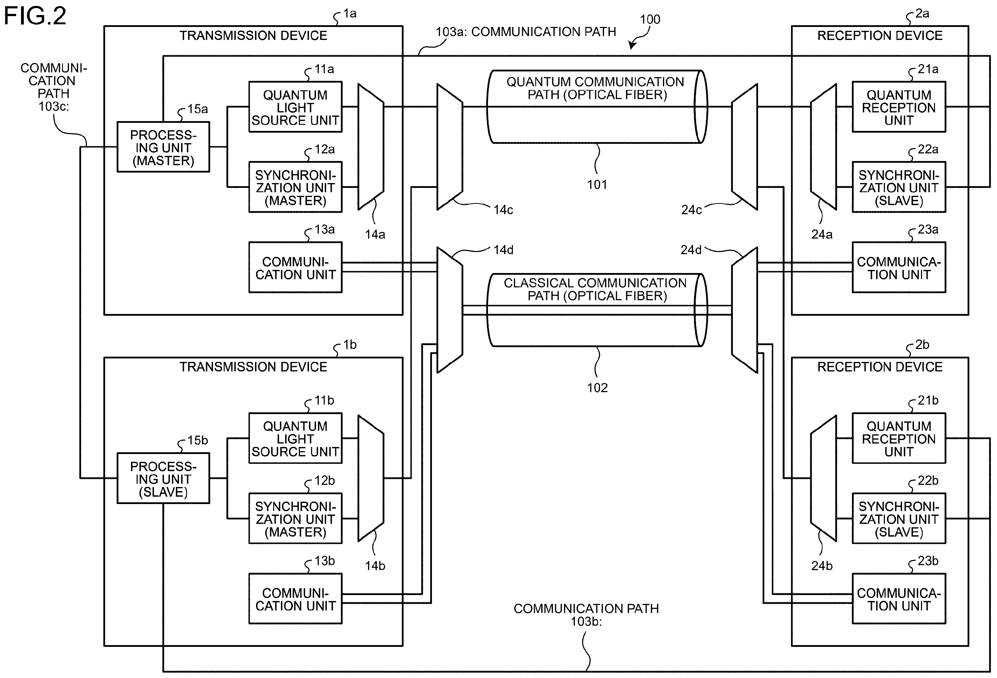

FIG. 2 is a diagram illustrating an example of a device configuration of a QKD system 100 according to the first embodiment. FIG. 2 illustrates an example in which the QKD system 100 has a redundant configuration constituted by a transmission device 1a and a reception device 2a, and a transmission device 1b and a reception device 2b.

In the following description, when the transmission devices 1a and 1b are not distinguished from each other, they are simply referred to as a transmission device 1. The same applies to notations such as other devices and function names.

The QKD system 100 of the first embodiment includes transmission devices 1a to 1b, reception devices 2a to 2b, multiplexers 14c to 14d and 24c to 24d, two optical fibers (the quantum communication path 101 and the classical communication path 102), and communication paths 103a to 103c.

The communication path 103a may be a single optical fiber, or may be a local area network (LAN) or a wide area network (WAN). The communication paths 103b and 103c are similar to the communication path 103a.

Although not illustrated in FIG. 2 due to the restriction of the paper surface, the transmission device 1a includes transmission/reception interfaces connected to the communication paths 103a and 103c. Similarly, the transmission device 1a includes a transmission/reception interface connected to the communication paths 103b and 103c. In addition, the reception device 2a includes a transmission/reception interface connected to the communication path 103a. Similarly, the reception device 2b includes a transmission/reception interface connected to the communication path 103b.

The transmission device 1a is a transmission side QKD device. The transmission device 1a includes a quantum light source unit 11a, a synchronization unit (master) 12a, a communication unit 13a, a multiplexing unit 14a, and a processing unit (master) 15a.

The quantum light source unit 11a generates optical pulses with a laser light source and attenuates the optical pulses to generate photons. The quantum light source unit 11a transmits, to the reception device 2a, a quantum signal obtained by encoding encryption key information into the photons.

The synchronization unit (master) 12a generates an optical pulse of a synchronization signal between the transmission device 1a and the reception device 2a and transmits the synchronization signal to the reception device 2a. The synchronization signal is a signal for synchronizing transmission and reception of quantum signals between the transmission device 1a and the reception device 2a. The quantum signal and the synchronization signal are optical signals having different wavelengths.

The communication unit 13a transmits a data signal received by a communication unit 23a of the reception device 2a. An optical wavelength of the data signal (optical pulse) transmitted from the communication unit 13a is different from an optical wavelength of the data signal transmitted from a communication unit 13b.

The multiplexing unit 14a performs optical wavelength-division multiplexing on the quantum signal of the quantum light source unit 11a and the synchronization signal of the synchronization unit (master) 12a, and outputs one optical wavelength-division multiplexed signal. The multiplexing unit 14a is implemented by, for example, a commercially-available optical wavelength-division multiplexing module. Note that the multiplexing unit 14a may be implemented by a device outside the transmission device 1a. In a case where the multiplexing unit 14a is implemented by a device outside the transmission device 1a, the multiplexing unit 14a may not be present inside the transmission device 1a. The same applies to multiplexing units 14b, 24a, and 24b, each will be described later.

The processing unit (master) 15a includes, for example, a control device, an arithmetic device, and the like, and is implemented by an analog or digital circuit or the like. The processing unit (master) 15a may be a central processor (CPU), or may be a general-purpose processor, a microprocessor, a digital signal processor (DSP), an application specific integrated circuit (ASIC), a field-programmable gate array (FPGA), and a combination thereof.

The processing unit (master) 15a receives the quantum reception status (reception status of the quantum signal) from a quantum reception unit 21a of the reception device 2a paired with the transmission device 1a via a communication path 103a, and receives the synchronization status (reception status of the synchronization signal) from a synchronization unit (slave) 22a via the communication path 103a.

The processing unit (master) 15a changes (determines) the transmission timing of the quantum signal of the quantum light source unit 11a or the transmission timing of the synchronization signal of the synchronization unit (master) 12a based on the quantum reception status and the synchronization status.

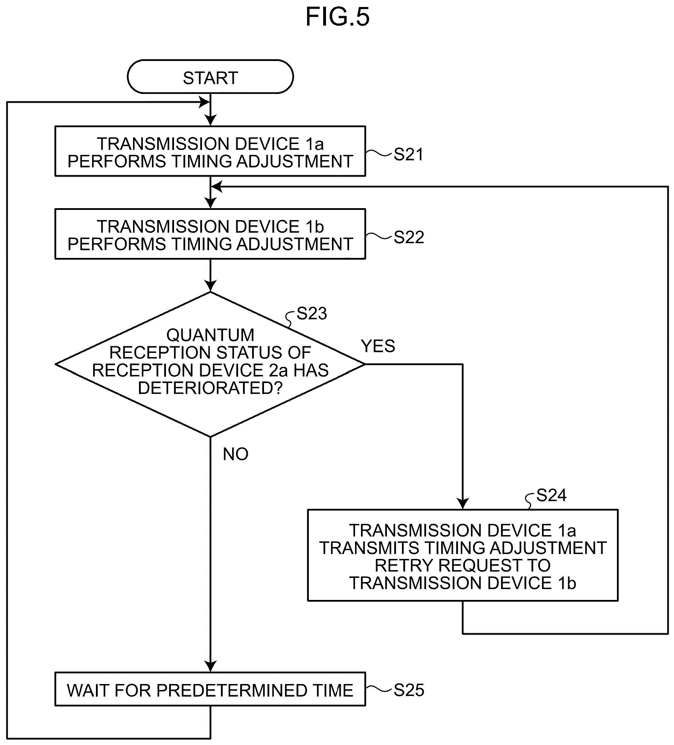

For example, the reception status of the quantum signal includes at least one of an error rate (Quantum Bit Error Rate, QBER) of the quantum signal or a count rate of photons of the quantum signal. For example, the processing unit (master) 15a determines the timing of transmitting the synchronization signal to the reception device 2a such that at least one of the error rate of the quantum signal or the count rate of the photons of the quantum signal falls within a predetermined range. Note that details of the timing adjustment method will be described later with reference to FIG. 5.

In addition, the processing unit (master) 15a transmits an adjustment instruction of the transmission timing of the quantum signal of a quantum light source unit 11b or the transmission timing of the synchronization signal of a synchronization unit (master) 12b to a processing unit (slave) 15b of the transmission device 1b via the communication path 103c.

The reception device 2a is a reception side QKD device. The reception device 2a includes the quantum reception unit 21a, the synchronization unit (slave) 22a, the communication unit 23a, and the multiplexing unit 24a.

The quantum reception unit 21a receives a photon transmitted from the transmission device 1 and decodes encryption key information from the photon.

The synchronization unit (slave) 22a receives a synchronization signal from the transmission device 1 and synchronizes the timing of reception process of the quantum signal transmitted from the transmission device 1 based on the synchronization signal.

The communication unit 23a receives a data signal transmitted from the communication unit 23a of the transmission device 1a.

The multiplexing unit 24a demultiplexes the optical wavelength-division multiplexed signal by the multiplexing unit 14a into a quantum signal and a synchronization signal, inputs the quantum signal to the quantum reception unit 21a, and inputs the synchronization signal to the synchronization unit (slave) 22a.

The transmission device 1b includes the quantum light source unit 11b, the synchronization unit (master) 12b, the communication unit 13b, the multiplexing unit 14b, and the processing unit (slave) 15b. The configuration of the transmission device 1b is the same as the configuration of the transmission device 1a.

The quantum light source unit 11b generates optical pulses with a laser light source and attenuates the optical pulses to generate photons. The quantum light source unit 11b transmits, to the reception device 2b, a quantum signal obtained by encoding encryption key information into the photons.

The synchronization unit (master) 12b generates an optical pulse of a synchronization signal between the transmission device 1b and the reception device 2b and transmits the synchronization signal to the reception device 2b.

The communication unit 13b transmits a data signal received by a communication unit 23b of the reception device 2b. The optical wavelength of the data signal transmitted from the communication unit 13b is different from the optical wavelength of the data signal transmitted from the communication unit 13a.

The multiplexing unit 14b performs optical wavelength-division multiplexing on the quantum signal of the quantum light source unit 11b and the synchronization signal of the synchronization unit (master) 12b, and outputs one optical wavelength-division multiplexed signal. The multiplexing unit 14b is implemented by, for example, a commercially-available optical wavelength-division multiplexing module.

The processing unit (slave) 15b has the same timing determination function as the processing unit (master) 15a of the transmission device 1a. Specifically, the processing unit (master) 15a issues an instruction to determine the timing of the quantum signal or the synchronization signal to the processing unit (slave) 15b. Then, the processing unit (slave) 15b determines the timing of the quantum signal or the synchronization signal.

Note that the relationship between the master and slave for timing determination may be changed in the middle. That is, by changing the settings of the transmission devices 1a and 1b, the processor 15b may be changed to the master, and the processor 15a may be changed to the slave.

The QKD system 100 may include three or more sets of the transmission device 1 and the reception device 2, and there may be a plurality of processors 15b as the slaves (however, there is one processor 15a as a master).

The configuration of the reception device 2b is the same as the configuration of the reception device 2a. The reception device 2b includes a quantum reception unit 21b, a synchronization unit (slave) 22b, a communication unit 23b, and a multiplexing unit 24b. The description of the quantum reception unit 21b, the synchronization unit (slave) 22b, the communication unit 23b, and the multiplexing unit 24b is similar to that of the reception device 2a, and thus the description thereof will be omitted.

The multiplexer 14c performs wavelength-division multiplexing on the optical signals from the multiplexing units 14a and 14b to form one optical signal, and transmits the optical signal to the multiplexer 24c via the quantum communication path 101 (one fiber).

The multiplexer 24c demultiplexes one optical signal transmitted from the multiplexer 14c into optical signals from the multiplexing units 14a and 14b.

The multiplexer 14d performs wavelength-division multiplexing on the data signals from the transmission devices 1a and 1b to form one optical signal and transmits the optical signal to the multiplexer 24d via the classical communication path 102 (one fiber).

The multiplexer 24d demultiplexes one optical signal transmitted from the multiplexer 14d into data signals from the transmission devices 1a and 1b.

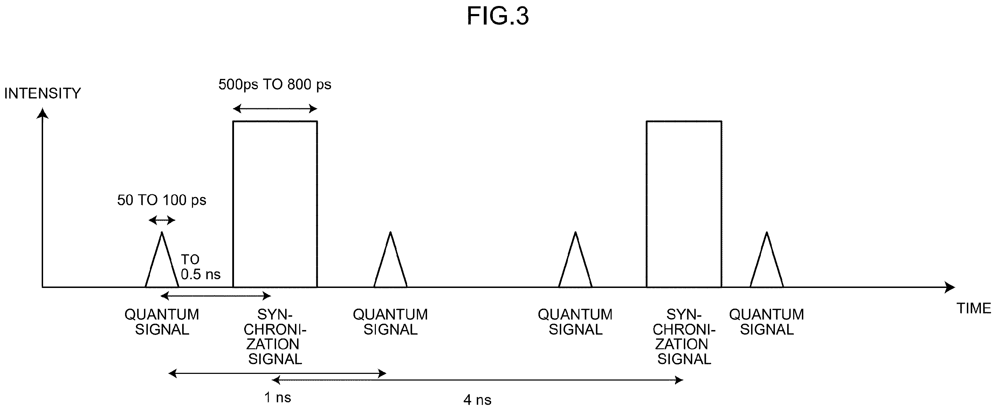

FIG. 3 is a diagram illustrating a processing example of optical wavelength-division multiplexing of the transmission device 1a of the first embodiment.

Quantum signals are generated, for example, by attenuating pulses generated with a laser light source driven at 1 GHz. The quantum signal is a weak optical signal with one photon level. When the laser beam is 1 GHz, the time difference between the quantum signals is 1 ns, and the signal width is about 50 ps to 100 ps in the first embodiment although it depends on the laser light source.

Although depending on a synchronization mechanism between transmission and reception, the synchronization signal is generated by using, for example, a phase locked loop (PLL). The synchronization signal is, for example, a rectangular wave generated at 250 MHz. In this case, a time difference between the synchronization signals is 4 ns. Although depending on the specification of the PLL, the signal width of the synchronization signal is set to be larger than the synchronization lock maintenance (PLL) limit, and is set to approximately 500 ps to 800 ps. Specifically, the signal width of the synchronization signal is set based on the drive clock of the quantum signal (for example, 1 GHz), the pulse width of the quantum signal (approximately 50 to 100 ps), and the performance of the PLL.

The time difference between the synchronization signal transmitted after the quantum signal and the quantum signal is set to 0.5 ns (corresponding to half of the drive clock of the laser light source of the quantum signal) or less when, for example, the drive clock of the quantum signal is 1 GHz.

The processing unit (master) 15a determines the timings of both the quantum signals so that the synchronization signal can fall within a time difference of 1 ns between the quantum signals, for example. The repetition frequency of the signal is fixed to 1 GHz and 250 MHz, but a delay circuit is provided in the signal generation unit in each of the quantum light source unit 11a and the synchronization unit (master) 12a. The processing unit (master) 15a determines the timing of the quantum signal or the timing of the synchronization signal by giving a delay amount to the signal output from each of the quantum light source unit 11a and the synchronization unit (master) 12a. By temporally separating the quantum signal and the synchronization signal, it is possible to suppress noise leakage (crosstalk) from the synchronization signal to the quantum signal.

Note that a processing example of the optical wavelength-division multiplexing of the transmission device 1b is similar to the case of the transmission device 1a.

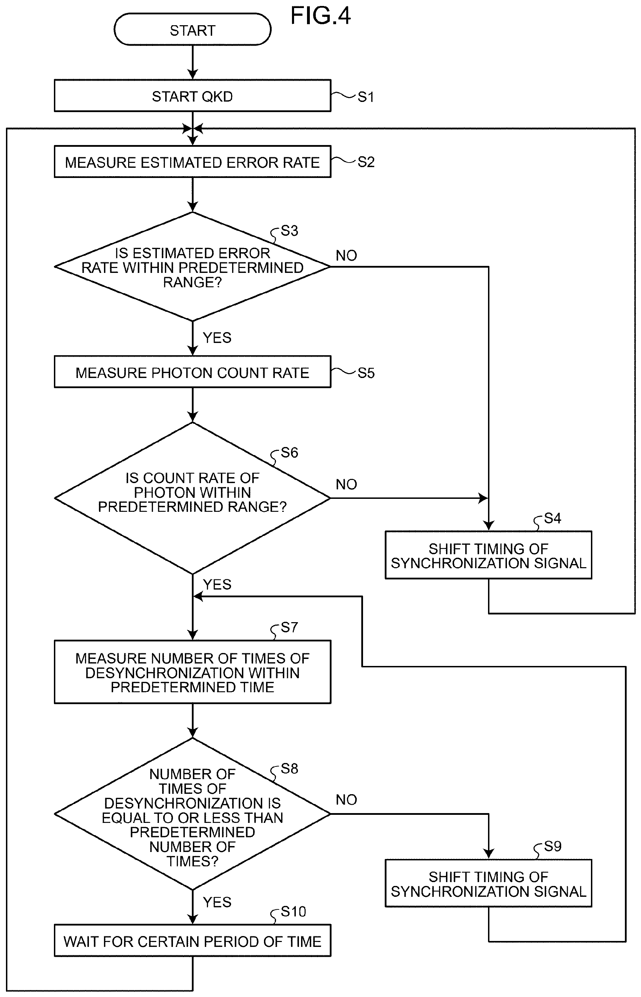

FIG. 4 is a flowchart illustrating an example of a timing adjustment method of the transmission device 1a of the first embodiment. First, the transmission device 1a starts the QKD (step S1). Specifically, the quantum light source unit 11a starts generating an encryption key by the QKD by transmitting a quantum signal to the reception device 2a.

Next, control based on the reception status of the reception side quantum signal is performed by the process of steps S2 to S6. First, the quantum reception unit 21a measures an estimated error rate (estimated QBER) of the quantum signal (step S2), and transmits the estimated error rate to the transmission device 1a.

The estimated error rate is estimated from error rates of some of the quantum signals in the QKD sifting process. Instead of the estimated error rate, the QBER obtained in the error correction process of the QKD may be used.

Next, the processing unit (master) 15a determines whether the estimated error rate is within a predetermined range (step S3).

When the estimated error rate is not within the predetermined range (step S3, No), the processing unit (master) 15a determines the timings of the quantum signal and the synchronization signal by shifting the timing of the synchronization signal (step S4). Note that in the process of step S4, the processing unit (master) 15a may shift the timing of the quantum signal, or may determine the timing of both the synchronization signal and the quantum signal. The timing adjustment is performed such that the quantum signal and the synchronization signal are temporally separated. A method of timing adjustment may be optional.

For example, the processing unit (master) 15a may adopt a method of simply shifting at least one of the synchronization signal or the quantum signal by a given amount in a given direction, shifting the signal in the same direction when the signal reception status is improved, and shifting the signal in the opposite direction when the signal reception status deteriorates.

The shift amount at that time may be a constant value or may be dynamically changed. In the case of dynamically changing, the vicinity of the optimum value is estimated from the increase degree of the frequency at which the shifting direction is changed, and the shifting amount is likely to be close to the optimum value when the shifting amount is smaller as the shifting amount is closer to the vicinity of the optimum value.

Moreover, for example, the processing unit (master) 15a may adopt a method of recording the past timing adjustment value and the signal reception status in a storage device in time series, and determining the timing adjustment value to be set next from the time series data by a machine learning model.

When the estimated error rate is within the predetermined range (step S3, Yes), the quantum reception unit 21a measures the count rate of the detected photons (step S5), and transmits the count rate to the transmission device 1a.

Next, the processing unit (master) 15a determines whether the count rate of photons is within a predetermined range (step S6). When the count rate of photons is not within the predetermined range (step S6, No), the process in step S4 is performed.

In a case where the count rate of photons is within the predetermined range (step S6, Yes), control based on the reception status of the reception side synchronization signal is performed by the process of steps S7 to S9. First, the synchronization unit (slave) 22a measures the number of times of desynchronization within a predetermined time, and transmits the measurement result (synchronization signal reception status) to the transmission device 1a (step S7).

Next, the processing unit (master) 15a determines whether the number of times of desynchronization is equal to or less than a predetermined number of times (step S8).

When the number of times of desynchronization is not equal to or less than the predetermined number of times (step S8, No), the processing unit (master) 15a shifts the timing of the synchronization signal to determine the timings of the quantum signal and the synchronization signal (step S9). In the process of step S9, the processing unit (master) 15a may shift the timing of the quantum signal. A method of timing adjustment of the synchronization signal or the quantum signal may be optional. Since the process of step S9 is the same as the process of step S4, the description thereof will be omitted.

In a case where the number of times of desynchronization is equal to or less than the predetermined number of times (step S8, Yes), after waiting for a given period of time (step S10), the timing adjustment process is executed again from the measurement of the estimated error rate in step S2.

To summarize the processing example of steps S2 to S9 described above, an implementation example of the synchronization signal timing adjustment process is as follows.

The processing unit (master) 15a shifts the timing of the synchronization signal in a predetermined time direction, and further shifts the timing of the synchronization signal in the predetermined time direction in a case where at least one of a reception status of the quantum signal or a reception status of the synchronization signal is improved. In addition, when at least one of the reception status of the quantum signal or the reception status of the synchronization signal deteriorates, the processing unit (master) 15a shifts the timing of the synchronization signal in a time direction opposite to a predetermined time direction.

Moreover, the processing unit (master) 15a records a signal reception status (at least one of a reception status of the quantum signal or a reception status of the synchronization signal) when the timing setting values are set one by one from a list including a plurality of timing setting values. Then, the processing unit (master) 15a may adopt a method of determining the timing by the timing setting value by which the signal reception status is most improved after scanning the entire list.

Furthermore, the processing unit (master) 15a may store, in the storage device, time series data in which the past timing adjustment value, and at least one of the reception status of the quantum signal or the reception status of the synchronization signal in a case where the timing adjustment value is applied, are stored in time series. Then, the processing unit (master) 15a may input the time series data to the machine learning model and use a value (a timing determination value determined by the machine learning model) output from the machine learning model.

The process of the flowchart of FIG. 4 is always executed while key generation by the QKD is performed. In the example of FIG. 4, all three steps (estimated error rate, photon count rate, and the number of times of synchronization) are executed in the determination of the timing adjustment, but one of these steps may be executed, or a plurality of steps may be executed in combination. Further, although the above-described three steps are sequentially executed, they may be executed in parallel. In addition, in a case where the determination in three steps (estimated error rate, photon count rate, and the number of times of synchronization) is executed in parallel, each determination is executed independently. Then, when the determination condition is not satisfied (in the example of FIG. 4, in the case of No in steps S3, S6, or S8), the process returns to the first step of each process of the three steps (estimated error rate, photon count rate, and the number of times of synchronization).

In addition, the processing unit (master) 15a may determine which one of the reception status of the quantum signal or the reception status of the synchronization signal is given priority in determining the timing to transmit the synchronization signal to the reception device 2a based on a predetermined priority. By determining the timing based on the priority, a reception status with a high priority can be further improved.

In addition, the signal reception status (for example, an estimated error rate, a photon count rate, the number of times of synchronization, and the like) as an index may be an instantaneous value at each time, a difference from the previous measurement time, an average value in a given period of time, or a standard deviation in a given period of time.

It is necessary to suspend key generation by the QKD while the processes of steps S4 and S9 described above is being executed. Therefore, the processes of steps S4 and S9 cannot be executed frequently. Considering this, the processing unit (master) 15a may measure the generation speed of the encryption key and the generation amount of the encryption key in a predetermined fixed period, and, in a case where these values are lower than those in the past, reduce the frequency of timing determination by increasing the waiting time in step S10.

Note that a timing determination method of the processing unit (slave) 15b of the transmission device 1b is similar to the procedure of FIG. 4.

FIG. 5 is a flowchart illustrating an example of a timing adjustment method of the QKD system 100 of the first embodiment. First, the transmission device 1a performs timing adjustment by executing the adjustment process of the flowchart of FIG. 4 described above (step S21).

Next, the transmission device 1b performs timing adjustment by executing the adjustment process of the flowchart of FIG. 4 described above (step S22).

Next, the processing unit (master) 15a of the transmission device 1a determines whether the quantum reception status of the reception device 2a has deteriorated (step S23). The quantum reception status is, for example, at least one of an estimated error rate or a photon count rate.

When the quantum reception status deteriorates (step S23, Yes), the processing unit (master) 15a of the transmission device 1a transmits a timing adjustment retry request to the transmission device 1b (step S24), and the process returns to step S22.

In a case where the quantum reception status has not deteriorated (step S23, No), after waiting for a predetermined time (step S25), the timing adjustment process is executed from the process of step S21 again.

In the timing adjustment process of each transmission device 1, it is necessary to suspend key generation by the QKD while the processes of steps S4 and S9 (see FIG. 4) is being executed. Therefore, the processes of steps S4 and S9 cannot be executed frequently. The processing unit (master) 15a may measure the generation speed of the encryption key and the generation amount of the encryption key in a predetermined fixed period, and, in a case where these values are lower than those in the past, the frequency of timing adjustment may be reduced by increasing the waiting time in step S25.

Note that, in the process of step S23, not only the quantum reception status but also whether the reception status of the synchronization signal (for example, the number of times of desynchronization) has deteriorated may be additionally determined. In addition, instead of the quantum reception status, it may be determined whether the reception status of the synchronization signal has deteriorated.

As described above, in the QKD system 100 according to the first embodiment, the processing unit (master) 15a receives the reception status of the QKD quantum signal from the reception device 2a, and determines, based on the reception status of the quantum signal, the timing at which the synchronization signal to be subjected to optical wavelength-division multiplexing with the quantum signal is transmitted to the reception device 2a.

In the QKD system 100 according to the first embodiment, the quantum signal and the synchronization signal are subjected to optical wavelength-division multiplexing in one optical fiber (quantum communication path 101). At this time, the multiplexing unit 14a (multiplexing unit 14b) alternately arranges the quantum signal and the synchronization signal in units of pulses (see FIG. 3), whereby the encryption key can be generated without providing an uncommunicable time.

According to the QKD system 100 of the first embodiment, the number of optical fibers can be reduced without impairing the generation speed of the encryption key using the QKD.

### First modification of first embodiment

Next, a first modification of the first embodiment will be described. In the description of the first modification, the same description as that of the first embodiment will be omitted, and contents different from those of the first embodiment will be described. In the first modification, the timing adjustment method of the QKD system 100 in FIG. 5 is changed.

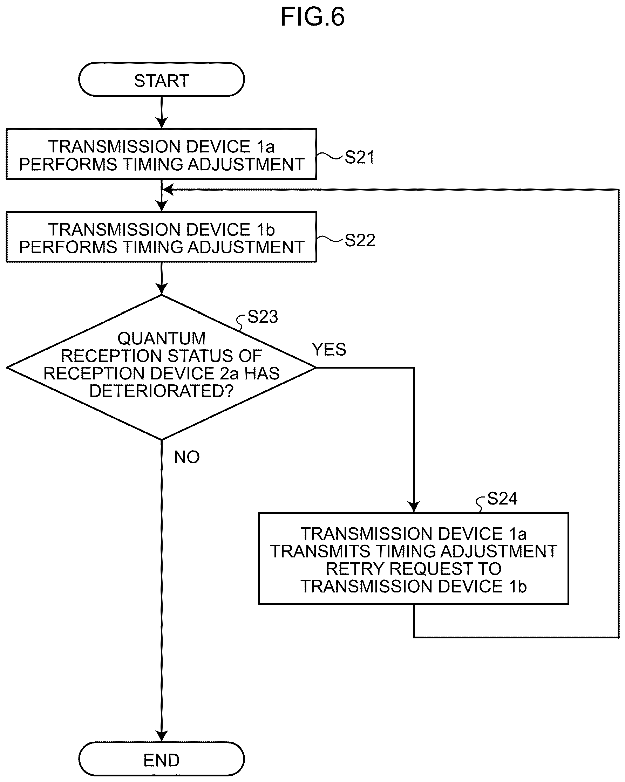

FIG. 6 is a flowchart illustrating an example of a timing adjustment method of the QKD system 100 according to the first modification of the first embodiment. The example of FIG. 6 is different from that of the first embodiment in that there is no step of waiting for a predetermined time (step S25 in FIG. 5 described above).

In the first modification, the processing unit (master) 15a starts the process of the procedure of FIG. 5 by executing the process of step S21 in accordance with an instruction or the like from the administrator of the transmission device 1a.

That is, the timing adjustment of the first modification is not performed periodically, but is performed irregularly each time in accordance with an instruction or the like from the administrator of the transmission device 1a.

### Second modification of first embodiment

Next, a second modification of the first embodiment will be described. In the description of the second modification, the description similar to that of the first embodiment will be omitted, and contents different from those of the first embodiment will be described. In the second modification, a case where the number of sets of the transmission device 1 and the reception device 2 in the QKD system 100 is N will be described.

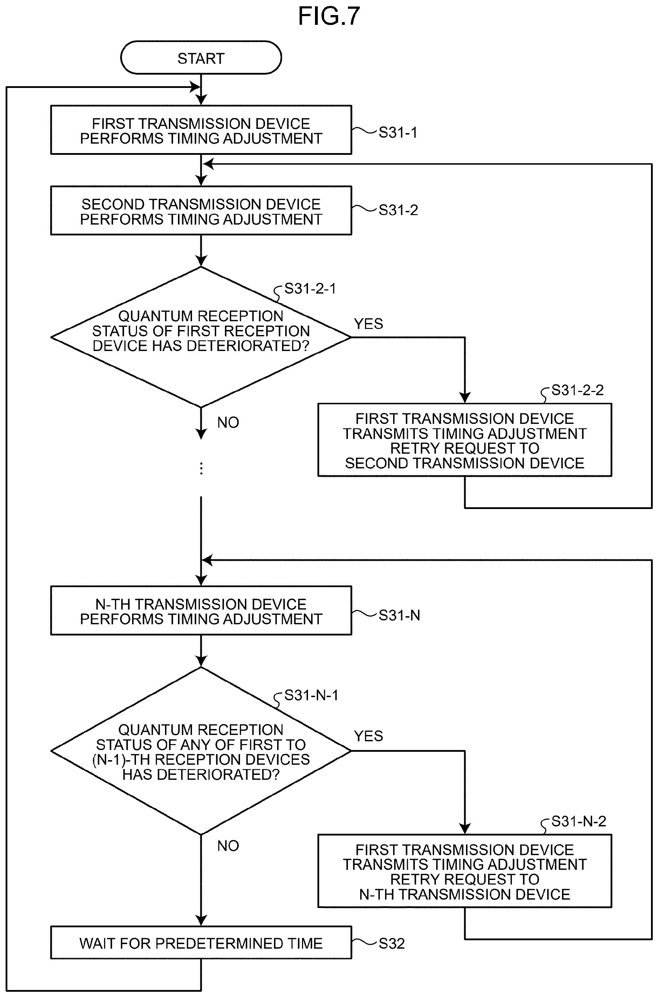

FIG. 7 is a flowchart illustrating an example of a timing adjustment method of the QKD system 100 according to the second modification of the first embodiment. First, the first transmission device 1 performs timing adjustment by executing the adjustment process of the flowchart of FIG. 4 described above (step S31-1).

Next, the second transmission device 1 performs timing adjustment by executing the adjustment process of the flowchart of FIG. 4 described above (step S31-2). The second transmission device 1 notifies a first transmission device 1 that the timing adjustment in step S31-2 has been performed.

Next, the processing unit (master) 15a of the first transmission device 1 determines whether the quantum reception status (reception status of quantum signals) of the first reception device 2 has deteriorated (step S31-2-1). The quantum reception status is, for example, at least one of an estimated error rate or a photon count rate. Specifically, the processing unit (master) 15a of the first transmission device 1 receives the quantum reception status of the first reception device 2 used for determination from the first reception device 2.

When the quantum reception status deteriorates (step S31-2-1, Yes), the processing unit (master) 15a of the first transmission device 1 transmits a timing adjustment retry request to the second transmission device 1 (step S31-2-2), and the process returns to step S31-2.

When the quantum reception status has not deteriorated (step S31-2-1, No), timing adjustment process of the N-th (N>2) transmission device 1 is sequentially performed (step S31-N). The N-th (N>2) transmission device 1 notifies the first transmission device 1 that the timing adjustment in step S31-N is performed.

Next, the processing unit (master) 15a of the first transmission device 1 determines whether the quantum reception status (the reception status of the quantum signal) of any of the first to (N-1)-th reception devices 2 has deteriorated (steps S31-N-1). The quantum reception status is, for example, at least one of an estimated error rate or a photon count rate. Specifically, the processing unit (master) 15a of the first transmission device 1 receives the quantum reception status of the first reception device 2 used for determination from the first reception device 2. For the quantum reception statuses of the second to (N-1)-th reception devices 2, first, the processing unit (slave) 15b of the second to (N-1)-th transmission devices 1 receives the quantum reception statuses of the second to (N-1)-th reception devices 2. Then, the processing unit (master) 15a of the first transmission device 1 receives the quantum reception statuses of the second to (N-1)-th reception devices 2 from the processing unit (slave) 15b of the second to (N-1)-th transmission devices 1.

When the quantum reception status deteriorates (step S31-N-1, Yes), the processing unit (master) 15a of the first transmission device 1 transmits a timing adjustment retry request to the N-th transmission device 1 (steps S31-N-2), and the process returns to the timing adjustment process of the N-th transmission device 1.

In a case where the quantum reception status has not deteriorated (step S31-N-1, No), after waiting for a predetermined time (step S32), the timing adjustment process is executed from the process of step S31 again.

In the timing adjustment process of each transmission device 1, it is necessary to suspend key generation by the QKD while the processes of steps S4 and S9 (see FIG. 4) is being executed. Therefore, the processes of steps S4 and S9 cannot be executed frequently. The processing unit (master) 15a of the first transmission device 1 may measure the generation speed of the encryption key and the generation amount of the encryption key for a predetermined fixed period, and, in a case where these values are lower than those in the past, the frequency of timing adjustment may be reduced by increasing the waiting time in step S32.

In the process of step S31-N-1, the quantum reception status of any of the first to (N-1)-th reception devices 2 may be all the quantum reception statuses of the first to (N-1)-th reception devices 2, or may be two or more quantum reception statuses selected from the first to (N-1)-th reception devices 2. Further, for example, the quantum reception status of the (N-1)-th reception device 2 immediately before may be determined.

In addition, as the target to be determined, not only the quantum reception status, but also whether the reception status (the number of times of desynchronization) of the synchronization signal deteriorates may be additionally determined. In addition, instead of the quantum reception status, it may be determined whether the reception status of the synchronization signal has deteriorated.

### Second embodiment

Next, the second embodiment will be described. In the description of the second embodiment, the description similar to that of the first embodiment will be omitted, and contents different from those of the first embodiment will be described. In the second embodiment, a configuration example in a case where the above-described data signal is not an optical signal but an electric signal will be described.

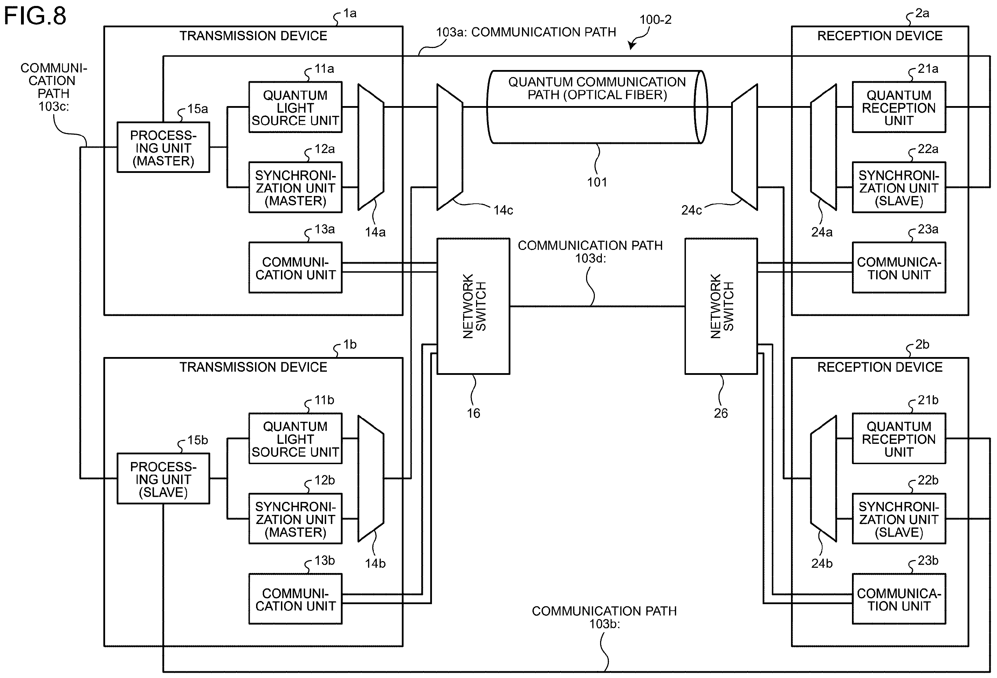

FIG. 8 is a diagram illustrating an example of a device configuration of a QKD system 100-2 according to the second embodiment. The example of FIG. 8 is different from that of the first embodiment in that the multiplexer 14d of the first embodiment is changed to a network switch 16 and the multiplexer 24d of the first embodiment is changed to a network switch 26.

The network switches 16 and 26 are devices that transfer data signals between the transmission devices 1a and 1b and the reception devices 2a and 2b via a communication path 103d. When the data signals from the communication units 13a and 13b are not optical signals but electrical signals (LAN), data communication may be performed via the network switches 16 and 26 as illustrated in FIG. 8.

### Third embodiment

Next, the third embodiment will be described. In the description of the second embodiment, the description similar to that of the first embodiment will be omitted, and contents different from those of the first embodiment will be described. In the third embodiment, a case where each of the processing unit (master) 15a and the processing unit (slave) 15b of the first embodiment is provided as an independent device will be described.

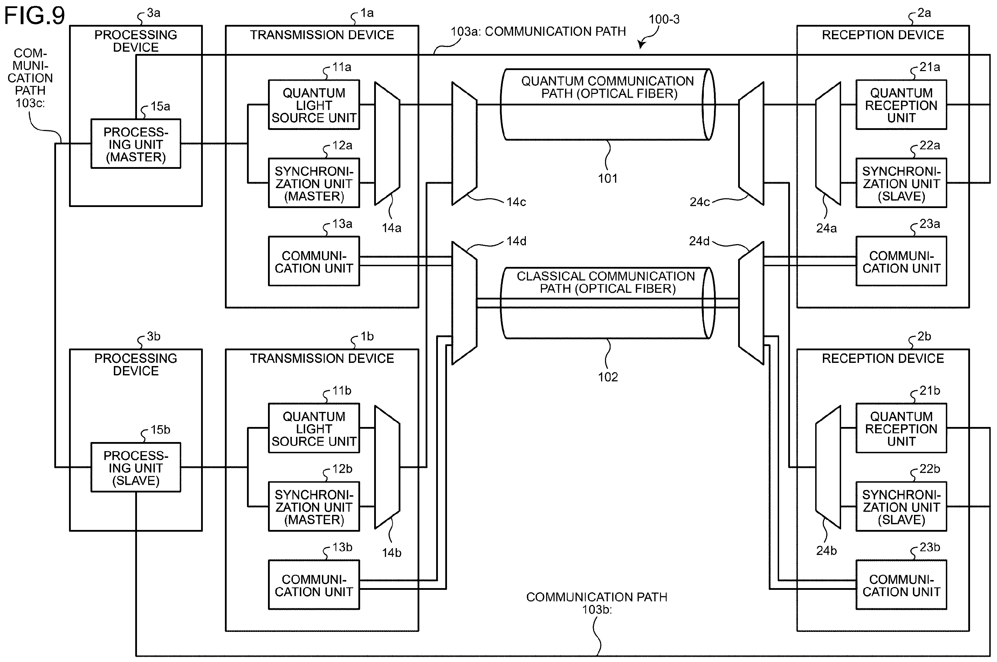

FIG. 9 is a diagram illustrating an example of a device configuration of a QKD system 100-3 according to the third embodiment. The QKD system 100 of the third embodiment includes transmission devices 1a to 1b, reception devices 2a to 2b, processing devices 3a to 3b, multiplexers 14c to 14d and 24c to 24d, two optical fibers (a quantum communication path 101 and a classical communication path 102), and communication paths 103a to 103b. In the example of FIG. 9, the processing devices 3a to 3b are further added to the device configuration of the first embodiment.

The processing device 3a includes a processing unit (master) 15a. The processing device 3b includes a processing unit (slave) 15b. The timing adjustment process by the processing unit (master) 15a and the processing unit (slave) 15b is similar to that of the first embodiment, and thus, description thereof is omitted.

In addition, since the transmission devices 1a to 1b, the reception devices 2a to 2b, the multiplexers 14c to 14d and 24c to 24d, two optical fibers (the quantum communication path 101 and the classical communication path 102), and the communication paths 103a to 103c are similar to those of the first embodiment, the description thereof will be omitted.

### Example of hardware configuration

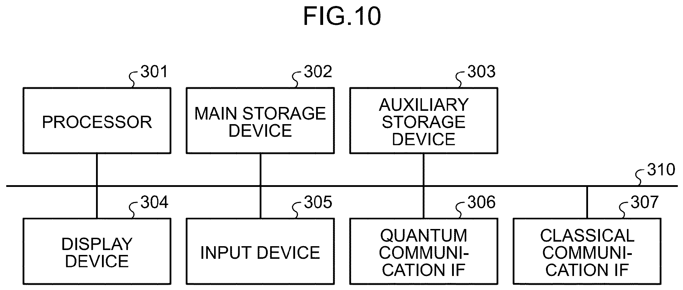

FIG. 10 is a diagram illustrating an example of a hardware configuration of the transmission device 1 and the reception device 2 of the first to third embodiments, and the processing device 3 of the third embodiment. The transmission device 1, the reception device 2, and the processing device 3 include a processor 301, a main storage device 302, an auxiliary storage device 303, a display device 304, an input device 305, a quantum communication interface (IF) 306, and a classical communication IF 307.

The processor 301, the main storage device 302, the auxiliary storage device 303, the display device 304, the input device 305, the quantum communication IF 306, and the classical communication IF 307 are connected via a bus 310.

The processor 301 executes a computer program read from the auxiliary storage device 303 to the main storage device 302. The main storage device 302 is a memory such as a read only memory (ROM) and a random access memory (RAM). The auxiliary storage device 303 is an HDD, a memory card, or the like.

The display device 304 displays states and the like of the transmission device 1, the reception device 2, and the processing device 3. The input device 305 receives an input from the user. Note that the display device 304 and the input device 305 may be implemented by a touch panel or the like having a display function and an input function. The display device 304 and the input device 305 may not be included in the transmission device 1, the reception device 2, and the processing device 3. In this case, for example, a display function and an input function of an external terminal connected to the transmission device 1, the reception device 2, and the processing device 3 are used.

The quantum communication IF 306 is an interface that connects each device to a quantum communication path through which photons are transmitted. The classical communication IF 307 is an interface that connects each device to a classical communication path through which a control signal or the like is transmitted. Note that the processing device 3 of the third embodiment may not include the quantum communication IF 306.

The computer program executed by the transmission device 1, the reception device 2, and the processing device 3 is stored, in a file in an installable format or an executable format, in a computer-readable storage medium such as a CD-ROM, a memory card, a CD-R, and a digital versatile disc (DVD), and is supplied as a computer program product.

In addition, the program executed by the transmission device 1, the reception device 2, and the processing device 3 may be stored in a computer connected to a network such as the Internet and provided by being downloaded via the network.

In addition, the programs executed by the transmission device 1, the reception device 2, and the processing device 3 may be provided via a network such as the Internet without being downloaded.

In addition, the program executed by the transmission device 1, the reception device 2, and the processing device 3 may be provided by being incorporated in a ROM or the like in advance.

The program executed by the transmission device 1, the reception device 2, and the processing device 3 has a module configuration including a function that can be implemented by the program among the functional configurations of the transmission device 1, the reception device 2, and the processing device 3. The processor 301 reads the program from the storage medium such as the auxiliary storage device 303 and executes the program, whereby the function implemented by the program is loaded to the main storage device 302. That is, the function implemented by the program is generated on the main storage device 302.

Note that some of or all the functions of the transmission device 1, the reception device 2, and the processing device 3 may be implemented by hardware such as an integrated circuit (IC). The IC is, for example, a processor that executes dedicated process.

In addition, in a case where each function is implemented by multiple processors, each processor may implement one of the functions or may implement two or more of the functions.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions as defined by the appended claims. The accompanying claims are intended to cover such forms or modifications as would fall within the scope of the inventions as defined by the appended claims.

### Supplement

The above-described embodiments can be summarized in the following technical schemes.

### Technical scheme 1

A processing device, comprising:
a processing unit configured to
receive a reception status of a quantum signal of quantum key distribution (QKD) from a reception device, and
determine a timing at which a synchronization signal to be subjected to optical wavelength-division multiplexing with the quantum signal is transmitted to the reception device, the timing being determined based on the reception status of the quantum signal.

### Technical scheme 2

The processing device according to the technical scheme 1, wherein
the reception status of the quantum signal includes at least one of an error rate of the quantum signal or a count rate of photons of the quantum signal, and
the processing unit is configured to determine the timing of transmitting the synchronization signal to the reception device such that at least one of the error rate of the quantum signal or the count rate of photons of the quantum signal falls within a predetermined range.

### Technical scheme 3

The processing device according to the technical scheme 2, wherein the error rate of the quantum signal is
an estimated error rate estimated from error rates of some of the quantum signals in a sifting process of QKD, or
an error rate obtained in an error correction process of the QKD.

### Technical scheme 4

The processing device according to the technical scheme 2 or 3, wherein a value indicating the reception status of the quantum signal is represented by
an instantaneous value at each measurement time,
a difference from an immediately previous measurement time,
an average value in a given period of time, or
a standard deviation in the given period of time.

### Technical scheme 5

The processing device according to any one of the technical schemes 1 to 4, wherein
the synchronization signal is a signal for synchronizing transmission and reception of a quantum signal between a transmission device and the reception device,
the processing unit is configured to further receive a reception status of the synchronization signal from the reception device,
the reception status of the synchronization signal includes the number of times of desynchronization within a predetermined time, and
the processing unit is configured to determine the timing of transmitting the synchronization signal to the reception device such that the number of times of the desynchronization falls within a predetermined number of times.

### Technical scheme 6

The processing device according to the technical scheme 5, wherein the processing unit is configured to determine, based on a predetermined priority, which one of a reception status of the quantum signal or a reception status of the synchronization signal is given priority in determining the timing of transmitting the synchronization signal to the reception device.

### Technical scheme 7

The processing device according to any one of the technical schemes 1 to 6, wherein the processing unit is configured to determine the timing of transmitting the synchronization signal to the reception device by
shifting a timing of the synchronization signal in a predetermined time direction,
further shifting a timing of the synchronization signal in the predetermined time direction in a case where at least one of a reception status of the quantum signal or a reception status of the synchronization signal is improved, and
shifting a timing of the synchronization signal in a time direction opposite to the predetermined time direction in a case where at least one of the reception status of the quantum signal or the reception status of the synchronization signal deteriorates.

### Technical scheme 8

The processing device according to any one of the technical schemes 1 to 6, wherein the processing unit is configured to
apply, to the timing of transmitting the synchronization signal to the reception device, a timing setting values one by one from a list including timing setting values, and
determine the timing of transmitting the synchronization signal to the reception device by using a timing setting value by which at least one of a reception status of the quantum signal or a reception status of the synchronization signal is most improved.

### Technical scheme 9

The processing device according to any one of the technical schemes 1 to 6, wherein the processing unit is configured to
input time series data to a machine learning model, the time series data being data in which a past timing adjustment value and at least one of a reception status of the quantum signal or a reception status of the synchronization signal in a case where the timing adjustment value is applied are stored in time series, and
determine the timing of transmitting the synchronization signal to the reception device by using a value output by the machine learning model.

### Technical scheme 10

The processing device according to any one of the technical schemes 1 to 9, wherein the processing unit is configured to determine a timing at which the quantum signal to be subjected to optical wavelength-division multiplexing with the synchronization signal is transmitted to the reception device, the timing being determine based on a reception status of the quantum signal.

### Technical scheme 11

The processing device according to any one of the technical schemes 1 to 10, wherein the quantum signal has a wavelength in a C-band (1530 nm to 1565 nm) range.

### Technical scheme 12

A quantum key distribution (QKD) device, comprising:
the processing device according to any one of the technical schemes 1 to 11;
a quantum light source unit configured to
   generate photons,
   encode encryption key information into the photons, and
   generate, as the quantum signal, the photons into which the encryption key information is encoded;
a synchronization unit configured to generate an optical pulse representing the synchronization signal; and
a multiplexing unit configured to
   perform optical wavelength-division multiplexing on the quantum signal and the synchronization signal, and
   transmit a signal obtained by the optical wavelength-division multiplexing to the reception device.

### Technical scheme 13

A quantum key distribution (QKD) system, comprising:
the processing device according to any one of the technical schemes 1 to 11;
a transmission device configured to transmit, to the reception device, the synchronization signal to be subjected to optical wavelength-division multiplexing with the quantum signal; and
the reception device configured to receive, from the transmission device, the synchronization signal to be subjected to optical wavelength-division multiplexing with the quantum signal.

### Technical scheme 14

The QKD system according to the technical scheme 13, further comprising:
a second transmission device configured to transmit, to a second reception device, a second synchronization signal to be subjected to optical wavelength-division multiplexing with a second quantum signal;
the second reception device configured to receive, from the second transmission device, the second synchronization signal to be subjected to optical wavelength-division multiplexing with the second quantum signal; and
a second processing device including a second processing unit as a slave, the second processing unit operating in accordance with an instruction from the processing unit as a master,
wherein the second processing unit is configured to
   receive a reception status of the second quantum signal from the second reception device, and
   determine a timing at which the second synchronization signal to be subjected to optical wavelength-division multiplexing with the second quantum signal is transmitted to the second reception device, the timing being determined based on the reception status of the second quantum signal.

### Technical scheme 15

A processing method implemented by a computer as a processing device, the method comprising:
receiving a reception status of a quantum signal of quantum key distribution (QKD) from a reception device; and
determining a timing at which a synchronization signal to be subjected to optical wavelength-division multiplexing with the quantum signal is transmitted to the reception device, the timing being determined based on the reception status of the quantum signal.

### Technical scheme 16

A computer program comprising computer-readable instructions to be executed by a computer, the instructions causing the computer to perform:
receiving a reception status of a quantum signal of quantum key distribution (QKD) from a reception device; and
determining a timing at which a synchronization signal to be subjected to optical wavelength-division multiplexing with the quantum signal is transmitted to the reception device, the timing being determined based on the reception status of the quantum signal.

## Claims

1. A processing device (3a), comprising:
a processing unit (15a) configured to
receive a reception status of a quantum signal of quantum key distribution (QKD) from a reception device (2a), and
determine a timing at which a synchronization signal to be subjected to optical wavelength-division multiplexing with the quantum signal is transmitted to the reception device (2a), the timing being determined based on the reception status of the quantum signal.

2. The processing device (3a) according to claim 1, wherein
the reception status of the quantum signal includes at least one of an error rate of the quantum signal or a count rate of photons of the quantum signal, and
the processing unit (15a) is configured to determine the timing of transmitting the synchronization signal to the reception device (2a) such that at least one of the error rate of the quantum signal or the count rate of photons of the quantum signal falls within a predetermined range.

3. The processing device (3a) according to claim 2, wherein the error rate of the quantum signal is
an estimated error rate estimated from error rates of some of the quantum signals in a sifting process of QKD, or
an error rate obtained in an error correction process of the QKD.

4. The processing device (3a) according to claim 2, wherein a value indicating the reception status of the quantum signal is represented by
an instantaneous value at each measurement time,
a difference from an immediately previous measurement time,
an average value in a given period of time, or
a standard deviation in the given period of time.

5. The processing device (3a) according to any one of claims 1 to 4, wherein
the synchronization signal is a signal for synchronizing transmission and reception of a quantum signal between a transmission device (1a) and the reception device (2a),
the processing unit (15a) is configured to further receive a reception status of the synchronization signal from the reception device (2a),
the reception status of the synchronization signal includes the number of times of desynchronization within a predetermined time, and
the processing unit (15a) is configured to determine the timing of transmitting the synchronization signal to the reception device (2a) such that the number of times of the desynchronization falls within a predetermined number of times.

6. The processing device (3a) according to claim 5, wherein the processing unit (15a) is configured to determine, based on a predetermined priority, which one of a reception status of the quantum signal or a reception status of the synchronization signal is given priority in determining the timing of transmitting the synchronization signal to the reception device.

7. The processing device (3a) according to any one of claims 1 to 4, wherein the processing unit (15a) is configured to determine the timing of transmitting the synchronization signal to the reception device (2a) by
shifting a timing of the synchronization signal in a predetermined time direction,
further shifting a timing of the synchronization signal in the predetermined time direction in a case where at least one of a reception status of the quantum signal or a reception status of the synchronization signal is improved, and
shifting a timing of the synchronization signal in a time direction opposite to the predetermined time direction in a case where at least one of the reception status of the quantum signal or the reception status of the synchronization signal deteriorates.

8. The processing device (3a) according to any one of claims 1 to 4, wherein the processing unit (15a) is configured to
apply, to the timing of transmitting the synchronization signal to the reception device (2a), a timing setting values one by one from a list including timing setting values, and
determine the timing of transmitting the synchronization signal to the reception device by using a timing setting value by which at least one of a reception status of the quantum signal or a reception status of the synchronization signal is most improved.

9. The processing device (3a) according to any one of claims 1 to 4, wherein the processing unit (15a) is configured to
input time series data to a machine learning model, the time series data being data in which a past timing adjustment value and at least one of a reception status of the quantum signal or a reception status of the synchronization signal in a case where the timing adjustment value is applied are stored in time series, and
determine the timing of transmitting the synchronization signal to the reception device (2a) by using a value output by the machine learning model.

10. The processing device (3a) according to any one of claims 1 to 4, wherein the processing unit (15a) is configured to determine a timing at which the quantum signal to be subjected to optical wavelength-division multiplexing with the synchronization signal is transmitted to the reception device (2a), the timing being determine based on a reception status of the quantum signal.

11. The processing device (3a) according to any one of claims 1 to 4, wherein the quantum signal has a wavelength in a C-band (1530 nm to 1565 nm) range.

12. A quantum key distribution (QKD) device (1a), comprising:
the processing device (3a) according to any one of claims 1 to 4;
a quantum light source unit (11a) configured to
generate photons,
encode encryption key information into the photons, and
generate, as the quantum signal, the photons into which the encryption key information is encoded;
a synchronization unit (12a) configured to generate an optical pulse representing the synchronization signal; and
a multiplexing unit (14a) configured to
perform optical wavelength-division multiplexing on the quantum signal and the synchronization signal, and
transmit a signal obtained by the optical wavelength-division multiplexing to the reception device (2a).

13. A quantum key distribution (QKD) system (100-3), comprising:
the processing device (3a) according to any one of claims 1 to 4;
a transmission device (1a) configured to transmit, to the reception device (2a), the synchronization signal to be subjected to optical wavelength-division multiplexing with the quantum signal; and
the reception device (2a) configured to receive, from the transmission device (1a), the synchronization signal to be subjected to optical wavelength-division multiplexing with the quantum signal.

14. The QKD system (100-3) according to claim 13, further comprising:
a second transmission device (1b) configured to transmit, to a second reception device (2b), a second synchronization signal to be subjected to optical wavelength-division multiplexing with a second quantum signal;
the second reception device (2b) configured to receive, from the second transmission device (1b), the second synchronization signal to be subjected to optical wavelength-division multiplexing with the second quantum signal; and
a second processing device (3b) including a second processing unit (15b) as a slave, the second processing unit (15b) operating in accordance with an instruction from the processing unit (15a) as a master,
wherein the second processing unit (15b) is configured to
receive a reception status of the second quantum signal from the second reception device (2b), and
determine a timing at which the second synchronization signal to be subjected to optical wavelength-division multiplexing with the second quantum signal is transmitted to the second reception device (2b), the timing being determined based on the reception status of the second quantum signal.

15. A processing method implemented by a computer as a processing device (3a), the method comprising:
receiving (S2,S5,S7) a reception status of a quantum signal of quantum key distribution (QKD) from a reception device (2a); and
determining (S3-S4,S6-S4,S8-S9) a timing at which a synchronization signal to be subjected to optical wavelength-division multiplexing with the quantum signal is transmitted to the reception device (2a), the timing being determined based on the reception status of the quantum signal.

16. A computer program comprising computer-readable instructions to be executed by a computer, the instructions causing the computer to perform:
receiving (S2,S5,S7) a reception status of a quantum signal of quantum key distribution (QKD) from a reception device (2a); and
determining (S3-S4,S6-S4,S8-S9) a timing at which a synchronization signal to be subjected to optical wavelength-division multiplexing with the quantum signal is transmitted to the reception device (2a), the timing being determined based on the reception status of the quantum signal.
